(19) Europäisches Patentamt
European Patent Office
Office européen des brevets

(11) **EP 2 509 006 A1**

(12) **EUROPEAN PATENT APPLICATION**

(43) Date of publication:
**10.10.2012 Bulletin 2012/41**

(51) Int Cl.:
*G06F 17/30* *(2006.01)*

(21) Application number: **11305404.3**

(22) Date of filing: **07.04.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing
92130 Issy-les-Moulineaux (FR)**

(72) Inventors:
• **Fleureau, Julien
35000, Rennes (FR)**
• **Guillotel, Philippe
35770, Vern sur Seiche (FR)**

(74) Representative: **Streit, Arend
Deutsche Thomson OHG
European Patent Operations
Karl-Wiechert-Allee 74
30625 Hannover (DE)**

(54) **Method and device for detecting affective events in a video**

(57)     For detecting affective events in a video, affective events being fast changes in a subject's emotional state while watching the video, a device is described, the device comprising receiving means INP for receiving samples of physiological signals from the subject while watching the video, the physiological signals comprising at least facial surface ElectroMyoGrams EMG and galvanic skin response GSR; and processing means PRC adapted for extracting feature vectors from buffered samples; wherein the processing means PRC is further adapted for using a supervised classifier GPC for determining and outputting whether the extracted feature vectors is indicative of an affective event, the supervised classifier GPC being designed on basis of a database DB of labeled exemplary feature vectors.

Fig. 3

**Description**

TECHNICAL FIELD

The invention is made in the field of detection of affective events in videos wherein affective events are fast changes in a subject's emotional state while watching a video.

BACKGROUND OF THE INVENTION

Catching the emotion of an audience member watching a movie clip may have many potential applications in a video content creation and distribution context. An advertising agency or a movie director trying to evaluate the emotional impact of its creation may be interested by such information. In the same way, a video containing extra tags associated with emotional state changes of the viewer may allow for searching a personal video database for content associated with a user-defined emotional state or state change (e.g. a search for sequences where a viewer has laughed). A precise affective profile of one audience member may be further useful in Video-On-Demand services to target the right content to provide to a specific customer (selecting comedy compatible with the user humour for example). Finally, information about the impact of scenes in a video on a user's emotional state can be used to appropriately summarize video contents.

Many biological signals are known to vary with the emotional state of a subject: Skin Conductivity (SC) measured through Galvanic Skin Response (GSR), SKin Temperature (SKT), Heart Rate Variability (HRV) measured by the means of a PhotoPlethysmoGraphy (PPG) devices or facial surface ElectroMyoGram (EMG) are some exemplary signals linked to emotional states. The link of such signals with the emotional state is described, for instance, in P. Lang, "The emotion probe", American Psychologist, vol. 50, no. 5, pp. 372-385, 1995; J. Wagner and E. Andre, "From Physiological Signals to Emotions: Implementing and Comparing Selected Methods for Feature Extraction and Classification," in IEEE International Conference on Multimedia and Expo. IEEE, 2005, pp. 940-943; E. Ganglbauer et al., "Applying Psychophysiological Methods for Measuring User Experience: Possibilities, Challenges, and Feasibility," in Proc. User Experience Evaluation Methods in Product Development workshop, 2009; or R. Calvo and S. D'Mello, "Affect Detection: An Interdisciplinary Review of Models, Methods, and their Applications," IEEE Transactions on Affective Computing, vol. 1, no. 1, pp. 18-37, 2010.

The devices to record such biodata are now more and more compact and non-obtrusive. Examples can be found in S. Rothwell et al., "The CDVPlex biometric cinema: sensing physiological responses to emotional stimuli in film," in Proc. International Conference on Pervasive Computing (Pervasive), Dublin, Ireland, May. Citeseer, 2006, pp. 1-4; in R. Matthews et al., "A Wearable Physiological Sensor Suite for Unobtrusive Monitoring of Physiological and Cognitive State," in Proceedings of the 29th Annual International Conference of the IEEE EMBS, 2007, pp. 5276-5281; or in R. R. Fletcher et al., "iCalm: Wearable Sensor and Network Architecture for Wirelessly Communicating and Logging Autonomic Activity," IEEE Transactions on Information Technology in Biomedicine, vol. 14, no. 2, 2010.

The physiological signals mentioned above are quite subject-specific and often require calibration. Moreover, even if a clear link exists between such signals variations and the emotional state, many other factors independent of the emotional state (temperature, humidity, diet, ...) may influence the signal's behaviour.

To deal with this subjectiveness and multi-dependency of physiological data, the prior art documents, e.g. M. Soleymani et al., "Affective Characterization of Movie Scenes Based on Multimedia Content Analysis and User's Physiological Emotional Responses," 10th IEEE International Symposium on Multimedia, pp. 228-235, Dec. 2008; L. Canini et al., "Users' response to affective film content: A narrative perspective," in International Workshop on Content-Based Multimedia Indexing, vol. 1, no. 1. IEEE, 2010, pp. 1-6; and C. L. Lisetti and F. Nasoz, "Using Noninvasive Wearable Computers to Recognize Human Emotions from Physiological Signals," European Journal on Advances in SIgnal Processing, vol. 2004, no. 11, pp. 1672-1687, 2004, generally adopt a common strategy that can be summed up into four main steps:

　　i) election of emotion-eliciting films or clips,

　　ii) projection of the clips and acquisition of the associated physiological data measured on the studied audience member,

　　iii) collection of the emotions felt during each clip using a self-assessment survey

　　iv) datamining to find links between the acquired physiological signals (or specific extracted features) and the associated affective state.

J. Russell, "A circumplex model of affect," Journal of personality and social psychology, vol. 39, no. 6, pp.

1161-1178, 1980, describes that the affective state may be directly given in terms of emotions (amusement, sadness, ...), or indirectly by an emotional model such as the very classical "valence / arousal" emotional model.

Concerning the datamining steps more specifically, two main groups of studies may be identified in the literature. Examples of a first class of works only try to find statistical linear correlations between the physiological data (or features) and the associated felt emotion (or its equivalent representation in terms of valence and arousal) to build linear models. For instance, Soleymani et al. record physiological data (GSR, PPG, EMG, SKT) to characterize the emotional content of video clips. By combining features extracted from those signals with other features coming from audio and video streams, they pointed out linear correlations with users' self-assessment of arousal and valence. In a same manner, Canini et al. tried to correlate GSR signal with arousal axis in a context of affective film content analysis. More specifically, the authors tried to adopt a narrative point of view in the analysis by splitting the analysed video sequences considering their narrative coherency.

A second category of works adopts a classification strategy to link physiological data and movie-elicited emotions. In this context the model validation is not done in terms of correlation coefficient but in terms of classification results which may be more meaningful and explicit. C. L. Lisetti and F. Nasoz proposed a complete setup, starting from the emotion eliciting film selection via a pilot study, to the classification step using three machine learning algorithms. Good results (around 80%) of classification are obtained to classify six emotions for multi-users data. Lee et al., "Using neural network to recognize human emotions from heart rate variability and skin resistance." Proceedings of the IEEE Engineering in Medicine and Biology Society Conference, vol. 5, pp. 5523-5, Jan. 2005, performed the same kind of works with similar results.

Whereas the previous presented works don't take into account real-time changes in emotion and directly process the whole signal content, in J. Bailenson, et al., "Real-time classification of evoked emotions using facial feature tracking and physiological responses," International Journal of Human-Computer Studies, vol. 66, no. 5, pp. 303-317, May 2008, a real-time classification is proposed with specific video stimuli containing an amusing, a neutral, a sad and another neutral segment. Video recordings of participant's facial expressions while watching the specific video stimuli are rated manually second per second by trained experts, the experts being unaware of which stimuli participants were watching. Physiological feature are selected and combined with the facial expression features to estimate two emotions, sadness and amusement.

But, M. Pantic and L. J. M. Rothkrantz: "Automatic Analysis of Facial Expressions: The State of the Art," IEEE Transactions on Pattern Analysis and Machine Intelligence, vol. 22, no. 12, pp. 1424-1445, 2000; found that the associated algorithms for face analysis through an adapted camera may be computationally expensive and very sensitive to the image quality (the camera could be far from the viewer) and/or to the luminosity conditions (darkness, especially in a home cinema room). Furthermore even under good image quality and luminosity conditions, facial expressions elicited by a movie are commonly limited in their visibility in general and therefore require expensive camera equipment in order to be captured accurately.

SUMMARY OF THE INVENTION

Due to the lack of a clear and subject-independent mapping between physiological signals and emotional states, real-time prediction, i.e. prediction with no or low latency, of a user's emotional response on currently viewed content is still subject to research in the art.

The inventors of the current invention recognized that for many applications no precise automatic assessment of a user's emotion is required but detection of fast changes in the user's emotional state is sufficient. Such prediction can be achieved using physiological data acquired according to prior art through a supervised classification technique and is in principle adapted for real-time or on-the-fly prediction.

In the following, fast and significant changes of a user's emotional state are termed "affective events" (or simply "events"). Affective events may be mainly caused in a film by: (i) relaxing, funny and exciting sequences or (ii) by shocking, frightening or upsetting sequences.

That is, it is proposed a device according to claim 1 and a method according to claim 11 for detecting affective events in a video wherein affective events are fast changes in a subject's emotional state while watching the video. The device comprises receiving means for receiving samples of physiological signals from the subject while watching the video, the physiological signals comprising at least facial surface ElectroMyoGrams and galvanic skin response; and processing means adapted for extracting feature vectors from the samples wherein the processing means are further adapted for using a supervised Classifier for determination of whether the extracted feature vectors is indicative of an affective event and for outputting the determination result, the supervised classifier being designed on basis of a database of labeled exemplary feature vectors.

Although affective events appear to be quite easily identified in a galvanic skin response sequence by a simple global analyse of the variations galvanic skin response variations as well as their shape are quite subject-specific. Moreover, in a real-time oriented approach with target latency, one doesn't have access to the whole signal but only buffered samples are available and the scale of analysis is thus very local. The use of supervised classifiers on physiological signals comprising facial surface ElectroMyoGrams allows a straightforward learning of various user profiles as well as a generalization. Moreover, once trained, a classifier takes profit of a knowledge based on all signal channels and it is computationally efficient to classify.

Furthermore, facial surface ElectroMyoGrams are very sensitive to slight facial expressions and independent from image quality and luminosity conditions. In addition, they do not require complex computations for detecting changes of facial expressions. Though they require use of electrodes, such electrodes can be embedded into affordable dedicated devices.

Affective events may have a valence, e.g. romantic or humoristic scenes have a positive valence while the horrifying or sad scenes, for example, have a negative valence. Therefore there is an embodiment in which the supervised Classifier is further used for further determining an associated binary valence value of a determined affective event.

In the embodiment, at least two different classification approaches can be used. A first classification technique decomposes classification into two hierarchical organized binary classifications, that is, classification of a vector of features as indicative of an affective event or not, and if so, classification of the affective event as positive or negative. In this first classification strategy the latter classification can be based on facial surface ElectroMyoGram, only. For more robust results, Galvanic skin response is also considered for the latter classification.

A second classification technique directly provides a ternary classification of feature vectors as indicative of "no affective event", indicative of "positive affective event" or indicative of "negative affective event".

In a further embodiment, the physiological signals further comprise at least one of Heart rate variability measured by means of a PhotoPlethysmoGraphy device and Skin Temperatures.

In yet a further embodiment, each labeled data set comprises test video, physiological signals acquired from a subject watching the test video and at least one label provided by a trained expert using the test video and the acquired physiological signals.

In yet even a further embodiment, the processor is further adapted for determining a likelihood that the extracted feature vectors is indicative of an affective event.

In another embodiment, the supervised Classifier takes into account temporal evolution of affective events.

In yet another embodiment, the supervised Classifier is a Gaussian Process classifier.

In even yet another embodiment, the device further comprises a memory connected to said receiving means and adapted for buffering the received samples for a predetermined duration wherein the processing means is connected to said memory and adapted for extracting feature vectors from the buffered samples.

The features of further advantageous embodiments are specified in dependent claims.

## BRIEF DESCRIPTION OF THE DRAWINGS

Exemplary embodiments of the invention are illustrated in the drawings and are explained in more detail in the following description. The exemplary embodiments are explained only for elucidating the invention, but not limiting the invention's disclosure or scope as defined in the claims.

In the figures:

Fig. 1 depicts an exemplary embodiment of a supervisor's user interface for observing subjects, content and acquired signals;

Fig. 2 depicts exemplary records of physiological data recorded while an affective event was present in an exemplary video and

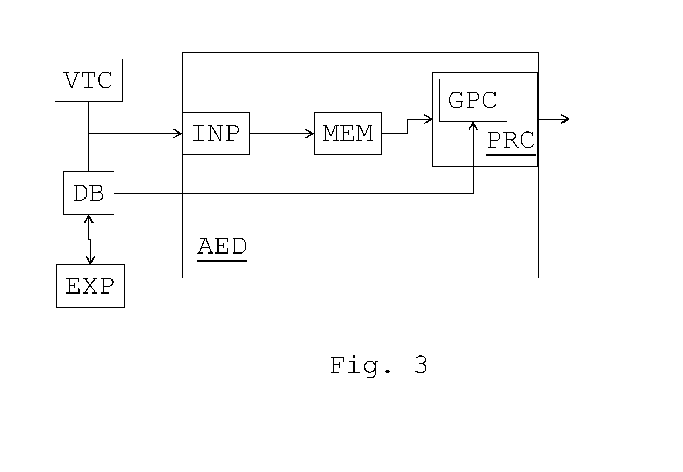

Fig. 3 depicts an exemplary embodiment of a device for detecting affective events in videos.

## EXEMPLARY EMBODIMENTS OF THE INVENTION

Obtaining real-time emotion of an audience member is not an easy task. One direct method would be to collect a direct self-assessment of each viewer, second per second, but this approach is clearly not realistic for consumer applications.

Therefore, the approach followed by the current invention is based on physiological signal samples from which is extracted an estimation of the current affective state of an audience member, directly from the physiological data. In being extracted from samples of short duration, the approach allows for real-time prediction, i.e. prediction on-the-fly with no or low latency. But, the approach is not restricted to real-time applications.

That is, it is proposed a methodology to build a new affect detector in the context of video viewing. Exemplary embodiments described in detail below are focussed on specific emotional patterns that may be useful in a video content production, distribution and evaluation context but the invention is not limited to such application scenarios and can be applied in other application scenarios also.

The exemplary embodiments are targeted towards applications which generally require real-time. The various detectors according to the exemplary embodiments combine the acquisition of physiological signals and the use of supervised classification techniques, e.g. by the means of Gaussian Processes.

That is, the exemplary embodiments are focussed on the emotional short-term impact that a movie may have on an audience member at a specific time. This exemplary scenario does not require specific emotions to be estimated precisely or direct positioning of a measured affective state in a discretized valence / arousal plane. Instead, in this exemplary scenario it is of interest to detect fast changes in emotional states, e.g. emotional state changes - called affective event, also- that occur within a predetermined time frame. In an embodiment, these changes have to have significance, i.e. exceed a predetermined threshold, in order to be considered as an affective event.

Such affective events may be mainly caused in a film by: i) relaxing, funny and exciting sequences in the case of positive valence, ii) by shocking, frightening or upsetting sequences in the case of negative valences. Consequently, in an embodiment the proposed detector not only automatically identifies those events but further estimates the event's associated valence. Again, this embodiment is adapted for estimating valence in real-time but the invention is not limited thereto. Valence estimation can be binary, positive or negative, or a more precise characterization. But, in the context of the exemplary scenario such precise characterization is not mandatory. In another exemplary scenario where the final goal is to check whether a given video sequence causes an expected reaction a simple binary valence appears sufficient, also. In an embodiment the estimation is compared with information regarding the emotional impact of a movie scene the information being provided by metadata using, for example, an emotion mark-up language (EmotionML).

For design and test of the various exemplary embodiments of the detector AED, an exemplary video clip database of 15 emotion-eliciting clips has been made up. The database comprises short videos of around two minutes with various contents which may cause positive or negative events in the viewer's biosignals.

The videos in this database have been randomly shown to 20 different subjects consisting of 18 males and 2 females between 20 and 60 years old. Each viewer was comfortably installed in a dedicated dark and quiet room. A headphone was used to isolate the subjects and increase their immersion. Before each experience, the subjects were asked to fill in a form to indicate their age and gender and to warn for potential troubles incompatible with the experimental context.

As stated before, Skin Conductivity (SC) measured through Galvanic Skin Response (GSR), SKin Temperature (SKT), Heart Rate Variability (HRV) measured by the means of a PhotoPlethysmoGraphy (PPG) devices and facial surface ElectroMyoGram (EMG) are some exemplary biosignals linked to affective states.

Among these, each of Galvanic Skin Response GSR captured using sensor electrodes placed on the second and third medial phalanges of the non-dominant hand, facial ElectroMyoGram EMG recorded using two appropriated electrodes placed on the zygomatic and frontal muscles and monitoring of the heart rate by the means of a Photo-PlethysmoGraph sensor placed at the end of the index was identified as low obtrusive and of high potential for good characterization of emotional valence.

Therefore, in the design phase of an embodiment of the detector AED these bio signals of the subjects were measured and recorded while the subjects were presented with one or more videos VID from the video database and corresponding exemplary detector AED was designed and tested using a database DB generated on basis of these biosignals, the corresponding exemplary detector AED being in particular useful for low intrusive applications.

In the design phase of said embodiment of the detector AED a video capture SUB of the subjects can be but needs not to be made to check for potential troubles during the experience. Similarly, the subject can be ask to give a self-assessment. If made, such video capture SUB and/or self assessment can be further used to retrieve some more information for the labelling step described below.

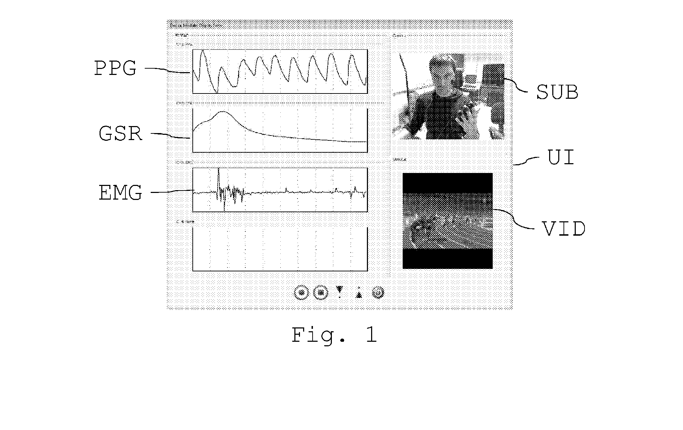

Fig. 1 depicts an exemplary screen-shot of a panel control UI observed by a supervisor during the capture. On the left, a real-time plot of the acquired signals PMG, GSR and EMG is shown. On the right, it is presented a video record SUB of the subject and a miniaturized version of the video VID the subject is watching.

In the design phase of said embodiment of the detector AED, raw data is acquired at a rate of 1kHz. This rate is chosen because of the EMG recording comprised in said embodiment and can be varied in case no EMG data is recorded. For recording, a BIOPAC MP36RW device (including API) can be used.

In the design phase of said embodiment of the detector AED, for each video clip VID and each subject, the group of acquired signals GSR, PPG and EMG was then manually labelled by experts EXP. More precisely, samples of physiological signals collected during overlapping time windows of predetermined duration were considered (e.g. 10 seconds found as sufficient to catch every emotionally-linked physiological changes) with half of said predetermined duration as overlap between successive time windows. The experts EXP then provided each of those windows with a tag indicating whether the time window comprises an "Event/Not Event". In an embodiment, the experts EXP further provided each of those windows provided with a tag indicative of "Event" with a further tag indicative of "Negative / Positive" valence of the detected event.

To give the "Event / Not Event" labels, the experts EXP can make use of GSR alone or in combination with EMG. To improve labelling the experts EXP can make further use of the presented video clips VID. Further, in the embodiment where video captures SUB of the subjects and/or self-assessments of the subjects are available, the experts EXP can make further use of this video captures SUB and/or the self-assessments. As known from P. Lang, "The emotion probe", mentioned above, emotional impacts are known to correlate with changes in the Autonomic Nervous System and, incidentally, to modify the Skin Conductivity. As consequence, events may be quite easily identified and segmented by a manual and global analysis of the GSR signal. But, in case video records SUB of the subjects during the experiment and/or self-assessments of the subjects are present they can be used by the experts together with the GSR signals, the EMG signals and/or the video clips VID in order to determine the valence of detected events.

That is, by combining information from all subjects and/or clips, an exemplary affective event database DB is built. It is made of physiological signal samples (e.g. GSR, PPG, EMG) extracted from the physiological records of subjects watching segments of video clips comprised in the video clip data base and with an associated label as provided by the experts. In an embodiment, the exemplary affective event database DB further comprises associated binary valences of the affective events, the binary valences being provided by the experts, also. The exemplary affective event database can but needs not comprise the video clips.

The exemplary affective event database DB is used for building an exemplary embodiment of the detector AED adapted for detecting affective events in videos and for estimating the valence of such events in a real-time orientated way, i.e. with latency at most as high as a target latency. This exemplary embodiment of the detector AED is designed such that the detector is able to reproduce the experts' labelling of the video segments in the video database.

In an embodiment the detector is implemented simulating on-the-fly behaviour, or such that it actually on-the-fly capable, and works as follows:

    i) every 5 seconds, the last 10 seconds of acquired physiological signals (GSR, EMG and PPG) are received,

    ii) from the received physiological signal samples, feature vectors are extracted,

    iii) the vector of extracted features is classified using a previously trained classifier such that it is decided whether the extracted feature vector corresponds to an affective event, and,

    iv) in case the extracted feature vector corresponds to an affective event, the vector of extracted features is classified using the previously trained classifier such that it is decided whether the extracted feature vector corresponds to an affective event of positive or of negative valence.

This approach is real-time oriented and may allow a time resolution of around 5 seconds. No specific user calibration step is required since the classifier contains sufficiently generalized knowledge to extend its initial learning to a larger subject group.

For design of the classifier GPC, the classifier GPC is provided with vectors of features extracted from exemplary physiological signal samples in the exemplary affective event database DB and experts' labelling of the exemplary physiological signal samples from which the feature vectors are extracted.

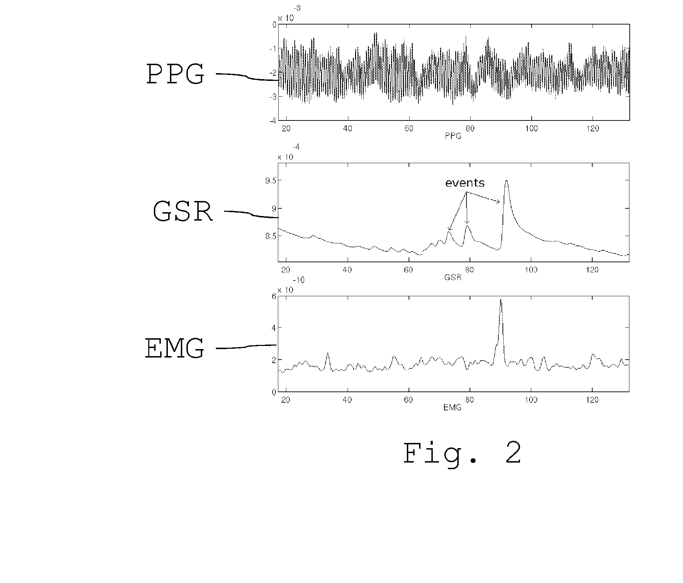

Fig. 2 depicts exemplary records of physiological data recorded while affective events occurred in an exemplary video presented to a subject from which the data was recorded. The horizontal axis of each plot is a temporal axis in units of seconds and the vertical axis matches each modality value in specific units. Each event matches a more or less funny instant of the clip for the viewer. The events triggered a skin conductivity response as can be seen in the GSR signal but the two first events did not cause any smile whereas the third one elicits a smile of the subject and therefore induced an associated peak in the EMG signal.

As explained before, the raw physiological data as acquired by measurements on the subject are not directly used for the classification but feature vectors are extracted there from and then classified. On each channel of the biosignal, some features are extracted. In an embodiment, the mean value and the maximum gap of the GSR are computed. In said embodiment, the energy in the high frequency band (cut-off at 5Hz) of the facial EMG signal is also extracted. And the maximum gap of the Heart Rate computed from the PPG is also considered.

In another embodiment, three exemplary features are extracted from the EMG signal, five further features are obtained from GSR signal and additional two features are derived from PPG signal.

The three exemplary features extracted from the EMG signal samples are:

    ● normalized mean value of the EMG-signal's high-frequency content,

    ● normalized standard deviation (energy) value of the EMG-signal's high-frequency content and

● normalized maximal value of the EMG-signal's high-frequency content wherein high-frequency content refers to content of the signal of a frequency of 5 Hz or higher.

The five exemplary features extracted from the GSR signal samples are extracted from a band-pass filtered version of the GSR-signal samples filtered between 0.5 and 1Hz. These five features are:

● slope value of the linear fit of the band-pass filtered version of the GSR-signal,

● normalized max gap (difference between the signal maximum and the previous signal minimum) of the band-pass filtered version of the GSR-signal,

● normalized mean value of the derivative the band-pass filtered version of the GSR-signal,

● normalized standard deviation value (energy) of the derivative of the band-pass filtered version of the GSR-signal, and

● normalized maximum value of the derivative of the band-pass filtered version of the GSR-signal.

The two exemplary features extracted from the PPG signal samples are extracted from a heart rate computed from the PPG signal samples. These two features are:

● normalized standard deviation of the heart rate and

● normalized maximum value of the heart rate signal.

In yet another embodiment, shape-based features are used.
In context of this invention, maximum gap G(s, I) of a monovariate signal {s(t)} on an interval I shall be defined by G(s, I) = max ({s(t0) -s(t), (t, t0) ∈ I, t < t0}).
That is, in an embodiment the affective events database DB comprises labelled vectors made of the features extracted from the recorded biosignals and the experts' labels the recorded bio signals being provided with. In an embodiment, this labelled feature vector data base DB is then used to design the classifier GPC.
A classifier GPC designed on basis of the labelled feature vector data base DB may allow for deciding whether a current vector of features under inspection is indicative of an affective event. Furthermore, in an embodiment where experts' labels in the database DB also comprise binary valences of affective events, the classifier GPC may be further adapted to give the associated binary valence.
Once trained, the classifier GPC can provide classification of video content VTC presented in a time window ere to all samples of an immediately subsequent time window being buffered. That is, in case of non-overlapping time windows, the latency is equal to or smaller than the duration of each time window, and in case of half overlapping time windows, the latency is equal to or smaller than half the duration of each time window.
In an exemplary embodiment, a Gaussian Process Classifier (GPC) has been chosen as classifier GPC.
Considering a binary and Bayesian classification context with a learning dataset X, the associated labels y = {$y_{i∈}$ {-1,+1} } and a new sample to classify x* with an unknown class y*. A GPC tries to evaluate the predictive density *p (y\* = +1 |X, y, x\*)* using the prior *p (y |x, f) = σ (yf (x) )* where:

● f is a Gaussian Process defined, by its mean function *m (x) = E [f (x) ]* (generally set to zero) and its covariance function (also called kernel for its mathematical properties - a covariance matrix being positive definite) *k (x, x0) = E [ (f (x) - m (x) (f (x0) - m (x0) ] ,*

● σ is a symmetric sigmoid function (logistic or probit functions for example) to squash f in [0, 1].

In a Bayesian way and with f\* = f(x\*), the previous predictive density may be therefore rewritten by introducing the latent variables:

$$\int\int (f*) p(f*|f, X, x*) p(y|X, f) p(f|X) p(y|X) dfdf*$$

This integral is analytically intractable because of the non-Gaussian likelihood (non-Gaussian prior), and specific methods have to be considered for the computation.

Monte-Carlo schemes are exact ways to perform this calculus but are expensive in computational load. Expectation-Propagation (EP) as proposed by T. Minka: "Expectation propagation for approximate Bayesian inference," in Proceedings of the 17th Conference in Uncertainty in Artificial Intelligence, vol. 17, 2001, pp. 362-369, gives an approximation with high accuracy and limited computational load. Both approaches can be used, Monte-Carlo schemes if priority is on exactness and EP if priority is on computational loads.

The kernel choice implied in the definition of f may be determinant in the classification results. In different embodiments, two different kernels are used. Those kernels are respectively:

- a tenth order polynomial kernel (P10) defined by

$$k(x, x') = (1 + x \cdot x')^{10}$$

where $\cdot$ denotes the canonical scalar product, and

- an anisotropic squared exponential kernel (xSE) allowing one length scale per dimension (noted $l_i$ for the ith dimension) and a common scale factor s defined by

$$k(x, x') = s^2 \exp\left(-\sum_i \frac{(x_i - x'_i)^2}{2l_i^2}\right)$$

and requiring $D+1$ hyper-parameters if $(x, x')$ lives in $R^D \times R^D$.

GPCs offer both the advantages of a Bayesian and probabilistic context as well as the power of kernel approaches (that are also used in Support Vector Machines theory). The model selection (settings of the kernel hyperparameters) can be directly addressed in a Bayesian way by optimizing the model marginal likelihood.

In an embodiment where the detector AED directly provides ternary classification as "no event", "negative event" or "positive event", a Laplace approach can be used to compute the probabilistic prediction as described in C. Rasmussen and K. Williams: "Gaussian processes for machine learning", MIT Press, 2006. Or, a "One versus All" scheme can be used to extend the binary GPC classifier to a multi-class context.

To evaluate the performances of the various embodiments of the detector, three scenarios corresponding to different real-life configurations have been considered.

A first scenario addresses a mono-user context, i.e. the various embodiments of the detector are trained and tested on a feature vectors extracted from physiological signals of a specific subject. An application context of this scenario comprises, for instance, a personal learning database for each individual user. In this scenario, records associated to each specific subject are extracted and, randomly and equally divided into individual training data and individual testing data. For each of the subjects, then a classifier is designed independently based on the individual training data and tested using the individual test data.

In a second scenario, a multi-user problem is considered. The various embodiments of the detector are trained and tested on the whole database collected from all the subjects. An application context of this scenario comprises, for instance, a database shared between different members of a community, like a household, an internet forum or subscribers to same or similar contents or services. In this scenario, records of all subjects are extracted and, randomly and equally divided into general training data and general testing data. Then, a common classifier is designed based on the general training data and tested using the general test data.

In a third scenario, a multi-user problem is considered also. But contrary to the second scenario the various embodiments of the detector are trained on a database collected from all-but-one of the subjects and tested on training data of the excluded subject. An application context of this scenario comprises, for instance, a device calibrated at the factory using a pre-built common database not including the customer to which the device is provided. Such a detector would avoid any further user-calibration and would allow for an out of the box system.

In each of the three scenarios, the various embodiments of the detector have been tested to evaluate and show more finely: i) the influence of the GPCs in the classification process, considering especially two different kernels (P10 and xSE), ii) the influence of the feature selection step in the classification results.

In particular, for each scenario 6 different configurations of the detector have been addressed:

1. Features extracted from GSR, EMG and PPG signals are selected to be used together with the GPC configured with a P10 kernel,

2. Features extracted from EMG signals only are selected to be used together with the GPC configured with a P10 kernel,

3. Features extracted from GSR signals only are selected to be used together with the GPC configured with a P10 kernel,

4. Features extracted from PPG signals only are selected to be used together with the GPC configured with a P10 kernel,

5. Features giving the best mean classification results are selected to be used with the GPC configured with a P10 kernel,

6. Optimal features obtained with a P10 kernel are selected to be used with the GPC configured with a xSE kernel.

Each of the five first configurations are meant to evaluate the influence of the features selection and the different modalities importance in the classification process whereas the last one is meant to evaluate the role of the kernel selection when using GPCs. Regarding the fifth simulation, the optimal features are obtained by an exhaustive analysis of all possible combinations.

For each of the six detector configurations, classification performances are evaluated on the two hierarchical organized binary sub-classifications, classification with respect to the presence of an affective event followed by classification of the valence of the event, independently. Each classification result is characterized by sensitivity, specificity and total score of good classification. In the case of the first and the third scenario, a mean (total) specificity, sensitivity and score is also determined to have a more global point of view. The detailed results of each scenario are now addressed.

In the first scenario it was found that for both sub-classifications, using the whole set of features for the detection provides good results but considering an optimal subset significantly improved the results. A cause for this may be that using all features during the classification stage may lead to overfitting phenomena and thus, to a great loss in terms of generalization which may be highly penalizing. Regarding more precisely the event detection, it was noticed that GSR and EMG seemed to be the most discriminating modalities whereas PPG features remain generally unable to correctly discriminate between the two classes (poor sensitivity especially).

It appears that the best combination of features for event classification makes use of the GSR modality and of the EMG modality to achieve the best performances.

Regarding the valence classification, EMG clearly appeared to be the most informative modality giving, alone, a mean score of 91.31% of good detection. Indeed, in the context of movie viewing correctly discriminating between positive and negative emotions is often equivalent to detect a smile or a laugh on a face. EMG signal easily catch this. Nevertheless, since it is possible to feel positive emotions without smiling the GSR seems to bring some more information regarding valence. With the set of optimal features, quite high performances are obtained by the proposed detector with around 92% of mean specificity, sensitivity and score.

Finally, when looking at the kernel's influence on both sub-classifications, it appears that, even if xSE kernels seem to offer slightly lower performances, the two kernels behave quite comparably in terms of results and therefore both can be used. The lower performances of xSE kernel may be explained by the fact that the optimal features have been computed using a P10 kernel configuration and could be a bit different using an xSE kernel. Furthermore, a P10 kernel seems to have better generalization properties in the targeted context.

For the second scenario the same kind of commentaries can be made concerning the kernel choice, the importance of the GSR modality to detect events, and the role of the EMG information to determine the associated valence. In fact those results are even reinforced and it was observed that using the EMG or PPG modalities alone make the event detection process impossible. Similar to what was found with respect to the first scenario, it was found that for both sub-classifications, using the whole set of features for the detection provides good results but considering an optimal subset of GSR and EMG features significantly improved the results in the second scenario. Combination of GSR and EMG features led again to the best detection performances with 78.05% of good detection for the events and 82.67% for the valence. Those performances suggest that a detector according to the invention seems to be able to generalize its performances to a group of subjects.

The third scenario is the most ambitious one as it requires the highest degree of generalization from the detector since the detector is trained on a group of subjects and is tested on a new unknown one. Regarding the great variability of physiological responses in between subjects, it is thus quite a hard task.

Nevertheless, results obtained for the events detection remain encouraging with a best score of 77.87% of mean good classification using optimal features. It therefore shows that a detector according to the invention is able to generalize to totally unknown data. Those performances remained quite homogeneous when considering each subject individually. Again it was found in the third scenario that, for both sub-classifications, using the whole set of features for the detection provides good results but considering an optimal subset of GSR and EMG features significantly improved the results although it seemed as if EMG has a less important role in the third scenario.

The choice of the kernel did not influence the final results significantly, which is why both kernel types can be used.

The current invention proposes a new physiological-based detecting method and device for detecting affective events in videos wherein method and device are such that they allow for detection on-the-fly, i.e. in real-time respectively within a target latency.

The invention is of particular interest for use in video content production, distribution and evaluation contexts but not limited to use in these contexts. It differs from prior art approaches by allowing for real-time, low latency respectively, detection of affective events of the emotional flow and their binary valence.

It takes advantage of at least one supervised classifier such as a Gaussian Process Classifier (GPC) to automatically build complex rules of decision combining multiple modalities, GSR and EMG modalities in particular. The GPC's kernel can be P10 or xSE wherein P10 appears favourable for achieving better generalization.

The GPC's probabilistic outputs can be compared with a threshold to have a "hard" classification. Or, a fuzzy interpretation of those outputs could be used for achieving a "soft" classification.

Furthermore, the temporal affect evolution can be taken into account, also, for improving the detection consistency.

## Claims

1. Device (AED) for detecting affective events in a video, affective events being fast changes in a subject's emotional state while watching the video, the device comprising

   ● receiving means (INP) for receiving samples of physiological signals from the subject while watching the video, the physiological signals comprising at least facial surface ElectroMyoGrams (EMG) and galvanic skin response (GSR); and
   ● processing means (PRC) adapted for extracting feature vectors from received samples wherein the processing means is further adapted for using a supervised classifier (GPC) for determination whether the extracted feature vectors is indicative of an affective event and for outputting the result of the determination, the Gaussian process classifier (GPC) being designed on basis of a database (DB) of labeled exemplary feature vectors.

2. The device (AED) according to claim 1, wherein the processing means (PRC) is further adapted for using the supervised classifier (GPC) for further determining an associated binary valence value of a determined affective event.

3. The device (AED) according to claim 2, wherein the associated binary valence value of the determined affective event is determined using facial surface ElectroMyoGrams (EMG).

4. The device (AED) according to one of claims 1-3, the physiological signals further comprising at least one of:

   Skin Temperatures; and
   Heart rate variability measured by means of a PhotoPlethysmoGraphy device.

5. The device (AED) according to one of claims 1-4, wherein each labeled data set comprises test video, physiological signals acquired from a subject watching the test video and at least one label provided by a trained expert using the test video and the acquired physiological signals.

6. The device (AED) according to one of the preceding claims, wherein the processing means (PRC) is further adapted for determining likelihood of the extracted feature vectors being indicative of an affective event.

7. The device (AED) according to one of the preceding claims, wherein the supervised Classifier takes into account temporal evolution of affective events.

8. The device (AED) according to one of the preceding claims, wherein the supervised Classifier is a Gaussian process classifier.

9. The device (AED) according to one of the preceding claims, wherein affective events are detected in real time.

10. The device (AED) according to one of the preceding claims, further comprising a memory (MEM) connected to said receiving means (INP) and adapted for buffering the received samples for a predetermined duration wherein the processing means (PRC) is connected to said memory (MEM) and adapted for extracting feature vectors from the buffered samples.

11. Method for detecting affective events in a video, affective events being fast changes in a subject's emotional state while watching the video (VID), the method comprising:

   ● using receiving means (INP) for receiving samples of physiological signals from the subject while watching the video (VID), the physiological signals comprising at least facial surface ElectroMyoGrams (EMG) and galvanic skin response (GSR);
   ● using means for processing (PRC) for extracting feature vectors from the received samples; and
   ● using a supervised Classifier (GPC) for determining whether the extracted feature vectors is indicative of an affective event, the supervised classifier (GPC) being designed on basis of a database (DB) of labeled exemplary feature vectors.

12. The method according to claim 11, further comprising using the supervised classification strategy for further determining an associated binary valence value of a determined affective event.

13. The method according to claim 11 or 12, wherein each labeled data set comprises a test video, physiological signals acquired from a subject watching the test video and at least one label provided by a trained expert using the test video and the acquired physiological signals.

Fig. 1

Fig. 2

Fig. 3

Europäisches
Patentamt

European
Patent Office

Office européen
des brevets

# EUROPEAN SEARCH REPORT

Application Number

EP 11 30 5404

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TAKAHASHI K: "Remarks on emotion recognition from multi-modal bio-potential signals", INDUSTRIAL TECHNOLOGY, 2004. IEEE ICIT '04. 2004 IEEE INTERNATIONAL CO NFERENCE ON HAMMAMET, TUNSIA DEC. 8-10, 2004, PISCATAWAY, NJ, USA,IEEE, vol. 3, 8 December 2004 (2004-12-08), pages 1138-1143, XP010822628, DOI: 10.1109/ICIT.2004.1490720 ISBN: 978-0-7803-8662-4 * the whole document * | 1-13 | INV. G06F17/30 |
| X,D | C. L. LISETTI, F. NASOZ: "Using Noninvasive Wearable Computers to Recognize Human Emotions from Physiological Signals", EUROPEAN JOURNAL ON ADVANCES IN SIGNAL PROCESSING, vol. 2004, no. 11, 2004, pages 1672-1687, XP002662225, * the whole document * | 1-13 | |
| A | US 2008/275309 A1 (STIVORIC JOHN [US] ET AL) 6 November 2008 (2008-11-06) * paragraph [0007] * * paragraph [0066] * * paragraph [0073] * * paragraph [0144] * * paragraph [0228] * * paragraph [0229] - paragraph [0233] * | 1-13 | TECHNICAL FIELDS SEARCHED (IPC) G06F |

The present search report has been drawn up for all claims

| Place of search | Date of completion of the search | Examiner |
|---|---|---|
| Munich | 26 October 2011 | Laurentowski, A |

EPO FORM 1503 03.82 (P04C01)

**ANNEX TO THE EUROPEAN SEARCH REPORT**
**ON EUROPEAN PATENT APPLICATION NO.**

EP 11 30 5404

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2011

| Patent document cited in search report | | Publication date | Patent family member(s) | | Publication date |
|---|---|---|---|---|---|
| US 2008275309 | A1 | 06-11-2008 | AT | 310444 T | 15-12-2005 |
| | | | AU | 6708301 A | 24-12-2001 |
| | | | BR | 0111995 A | 28-06-2005 |
| | | | CA | 2413220 A1 | 20-12-2001 |
| | | | DE | 60115234 D1 | 29-12-2005 |
| | | | DE | 60115234 T2 | 10-08-2006 |
| | | | EP | 1292217 A2 | 19-03-2003 |
| | | | EP | 1639939 A1 | 29-03-2006 |
| | | | ES | 2253393 T3 | 01-06-2006 |
| | | | IL | 153478 A | 03-08-2009 |
| | | | JP | 2004512061 A | 22-04-2004 |
| | | | MX | PA02012482 A | 10-09-2004 |
| | | | WO | 0196986 A2 | 20-12-2001 |
| | | | US | 2006031102 A1 | 09-02-2006 |
| | | | US | 7689437 B1 | 30-03-2010 |
| | | | US | 2009118590 A1 | 07-05-2009 |
| | | | US | 2008183051 A1 | 31-07-2008 |
| | | | US | 2008183052 A1 | 31-07-2008 |
| | | | US | 2008171918 A1 | 17-07-2008 |
| | | | US | 2008177158 A1 | 24-07-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. LANG.** The emotion probe. *American Psychologist,* 1995, vol. 50 (5), 372-385
- From Physiological Signals to Emotions: Implementing and Comparing Selected Methods for Feature Extraction and Classification. **J. WAGNER ; E. ANDRE.** IEEE International Conference on Multimedia and Expo. IEEE. 2005, 940-943
- **E. GANGLBAUER et al.** Applying Psychophysiological Methods for Measuring User Experience: Possibilities, Challenges, and Feasibility. *Proc. User Experience Evaluation Methods in Product Development workshop,* 2009
- **R. CALVO ; S. D'MELLO.** Affect Detection: An Interdisciplinary Review of Models, Methods, and their Applications. *IEEE Transactions on Affective Computing,* 2010, vol. 1 (1), 18-37
- **S. ROTHWELL et al.** The CDVPlex biometric cinema: sensing physiological responses to emotional stimuli in film. *Proc. International Conference on Pervasive Computing,* 2006, 1-4
- **R. MATTHEWS et al.** A Wearable Physiological Sensor Suite for Unobtrusive Monitoring of Physiological and Cognitive State. *Proceedings of the 29th Annual International Conference of the IEEE EMBS,* 2007, 5276-5281
- **R. R. FLETCHER et al.** iCalm: Wearable Sensor and Network Architecture for Wirelessly Communicating and Logging Autonomic Activity. *IEEE Transactions on Information Technology in Biomedicine,* 2010, vol. 14 (2
- **M. SOLEYMANI et al.** Affective Characterization of Movie Scenes Based on Multimedia Content Analysis and User's Physiological Emotional Responses. *10th IEEE International Symposium on Multimedia,* December 2008, 228-235

- Users' response to affective film content: A narrative perspective. **L. CANINI et al.** International Workshop on Content-Based Multimedia Indexing. IEEE, 2010, vol. 1, 1-6
- **C. L. LISETTI ; F. NASOZ.** Using Noninvasive Wearable Computers to Recognize Human Emotions from Physiological Signals. *European Journal on Advances in SIgnal Processing,* 2004, vol. 2004 (11), 1672-1687
- **J. RUSSELL.** A circumplex model of affect. *Journal of personality and social psychology,* 1980, vol. 39 (6), 1161-1178
- **LEE et al.** Using neural network to recognize human emotions from heart rate variability and skin resistance. *Proceedings of the IEEE Engineering in Medicine and Biology Society Conference,* January 2005, vol. 5, 5523-5
- **J. BAILENSON et al.** Real-time classification of evoked emotions using facial feature tracking and physiological responses. *International Journal of Human-Computer Studies,* May 2008, vol. 66 (5), 303-317
- **BUT, M. PANTIC ; L. J. M. ROTHKRANTZ.** Automatic Analysis of Facial Expressions: The State of the Art. *IEEE Transactions on Pattern Analysis and Machine Intelligence,* 2000, vol. 22 (12), 1424-1445
- **T. MINKA.** Expectation propagation for approximate Bayesian inference. *Proceedings of the 17th Conference in Uncertainty in Artificial Intelligence,* 2001, vol. 17, 362-369
- **C. RASMUSSEN ; K. WILLIAMS.** Gaussian processes for machine learning. MIT Press, 2006